# EUROPÄISCHE PATENTSCHRIFT

(11) **EP 1 807 175 B1**
(45) Veröffentlichungstag und Bekanntmachung des Hinweises auf die Patenterteilung: **14.12.2011**
(21) Anmeldenummer: 05778469.6
(22) Anmeldetag: 07.09.2005
(51) Int. Cl.: B01D 61/36, B01D 71/38

(54) **MEMBRAN ZUR TRENNUNG VON STOFFGEMISCHEN UND VERFAHREN ZU IHRER HERSTELLUNG**
MEMBRANE FOR THE SEPARATION OF MATERIAL MIXTURES AND METHOD FOR PRODUCTION THEREOF
MEMBRANE SERVANT A SEPARER DES MELANGES DE MATIERES, ET SON PROCEDE DE PRODUCTION

(30) Priorität: 05.11.2004 DE 102004053402
(43) Veröffentlichungstag der Anmeldung: 18.07.2007
(73) Patentinhaber: Helmholtz-Zentrum Geesthacht Zentrum für Material- und Küstenforschung GmbH, 21502 Geesthacht (DE)
(72) Erfinder: EBERT, Katrin, 21339 Lüneburg (DE); RUFFMANN, Bastian, 19053 Schwerin (DE); KOLL, Joachim, 21493 Schwarzenbek (DE); WENZLAFF, Axel, 21039 Escheburg (DE)
(74) Vertreter: Grebner, Christian Georg Rudolf
(86) Internationale Anmeldenummer: PCT/EP2005/009609
(87) Internationale Veröffentlichungsnummer: WO 2006/048068

(56) Entgegenhaltungen:
- US-A- 5 004 861
- US-A- 5 059 327

## Beschreibung

Die Erfindung betrifft eine Membran zur Trennung von Stoffgemischen nach der Methode der Dampfpermeation oder der Pervaporation, insbesondere zur Entwässerung organischer Lösemittel, umfassend wenigstens eine Trägerschicht und wenigstens eine darauf befindliche Trennschicht, sowie ein Verfahren zur Herstellung einer derartigen Membran.

In US-A-5 059 327 ist eine Trennmembran beschrieben, die aus einem intermolekularvernetzten Reaktionsprodukt aus einer Mischung von Polyvinlyalkohol oder Polyvinylalkoholcopolymer und einer Polysterensulfonsäure oder einem Polysterensulfonsäurecopolymer besteht. Die Sulfonsäure kann dabei in Form einer Sulfonatgruppe eingebracht werden, wobei das Sulfonat ein Alkalimetallsulfonat ist.

WO 00/53833 A1 betrifft ein Verfahren zur Herstellung von Formkörpern, insbesondere Fäden oder Folien, aus wenigstens einem Polymeren aus der aus Polysaccharid, Polysaccharidderivat und Polyvinylalkohol bestehenden Gruppe durch Bildung von wenigstens zwei Lösungen des Polymeren in einem Amin-N-oxid enthaltenden Lösungsmittel, von denen wenigstens eine einen oder mehrere Zusatzstoffe in feiner Verteilung enthält, gleichzeitiges Extrudieren der Lösungen unter Bildung eines vereinigten Extrudats und Ausfällen des Extrudats durch Berührung mit einem Koagulationsmittel.

Im Stand der Technik ist eine Vielzahl von Membranen bekannt, bei denen die stoffselektive Trennschicht aus Polyvinylalkohol besteht. Eine chemische Stabilität dieser Membranen bzw. der stoffselektiven Trennschichten bspw. gegenüber Wasser wird dadurch erreicht, dass man den Polyvinylalkohol vernetzt. Die bekannten Membranen dieser Art sind prinzipiell für die Anwendung zum Trennen von dampfförmigen Medien oder Gas-Dampfgemischen bis zu Temperaturen von 105 °C geeignet. Bei über 105 °C hinausgehenden Temperaturen ergeben sich Stabilitätsprobleme bei derartigen Membranen. So ist bspw. eine Membran in der DE-A-32 20 570 beschrieben, deren stoffselektive Trennschicht aus vernetzten Polyvinylalkohol besteht.

Es sind aber auch andere Membranen auf der Basis von Polyvinylalkohol bekannt, die eine geordnete Struktur mit großem mikrokristallinen Anteil aufweisen, DE-C-40 04 153, bei denen die Kristallinitat durch mehrtägige Lagerung der Beschichtungslösung bei Temperaturen von -10 bis +10 °C erhalten wird.

Auch für diese Membran gilt die nicht mehr gewährleistete Stabilität der Membran bei Temperaturen von grösser als 105 °C.

Zusammenfassend kann festgestellt werden, dass alle bekannten Membranen, die auf stoffselektiven Trennschichten auf der Basis von Polyvinylalkohol aufgebaut sind, bei Temperaturen, die höher als 105 °C liegen, keine ausreichende mechanische und chemische Stabilität aufweisen, bspw. für die Entwässerung organischer Lösemittel mittels Dampfpermeation und auch eine ungenügende Stabilität im Zusammenhang mit einer Kondensatbildung auf der Membranoberfläche. Aufgrund ihrer ungenügenden mechanischen Stabilität bei Temperaturen über 105 °C weisen sie zudem den Nachteil auf, dass diese nicht geeignet sind, zur Ausbildung von Kissenmembranen (Membrankissen, Membrantaschen) herangezogen werden zu können, da derartige Membranelemente zu ihrer Herstellung im Randbereich verschweißt werden müssen, was mit den bisherigen Membranen auf der Basis von Polyvinylalkohol als stoffselektiver Trennschicht nicht möglich ist.

Es ist somit Aufgabe der vorliegenden Erfindung, eine Membran der eingangs genannten Art zu schaffen, die eine höhere Lösemittelstabilität als bisher bekannte Membranen aufweist, und die eine Temperaturstabilität aufweist, die bis in den Bereich von +150 °C und höher reicht, wobei eine solche Membran im Randbereich schweißbar sein soll, so dass sie auch als Kissenmembran (Membrankissen, Membrantasche) ausgebildet werden können.

Des weiteren ist es Aufgabe der vorliegenden Erfindung, ein Verfahren bereitzustellen, mit dem derartige Membranen auf an sich einfache Weise hergestellt und auf einfache Weise dem gewünschten Trennzweck entsprechend konditioniert werden können und Membranen dieser Art einfach hergestellt werden können und als Membrankissen aufgebaut in ihrem Randbereich durch Schweißung verbunden werden können.

Die obige Aufgabe wird im Zusammenhang mit dem erfindungsgemäßen Verfahren zur Herstellung einer Membran zur Trennung von Stoffgemischen nach der Methode der Dampfpermeation oder der Pervaporation, insbesondere zur Entwässerung organischer Lösemittel, umfassend wenigstens eine Trägerschicht und wenigstens eine darauf aufgebrachte stoffselektive Trennschicht, dadurch gelöst, dass
a. in ein Lösemittel Polyvinylalkohol gegeben wird,
b. nachfolgend in das Lösemittel-Polyvinylalkohol-Gemisch eine metallorganische Verbindung gegeben wird, die wenigstens ein metallisches Element enthält, das aus der Magnesium- oder Aluminium-Gruppe stammt oder Zirkonium oder Titan ist, wobei die metallorganische Verbindung Tetraethylorthotitanat, Tetraorthopropylzirkonat oder ein wasserlöslicher metallorganischer Chelatkomplex ist, und danach
c. das Lösemittel-Polyvinylalkohol-metallorganische Verbindung-Gemisch als stoffselektive Trennschicht auf die Trägerschicht aufgebracht wird,
wobei das die metallorganische Verbindung enthaltende Lösemittel-Polyvinylalkohol-metallorganische Verbindung-Gemisch nach Aufbringung auf die Trägerschicht zusammen mit der Trägerschicht einer thermischen Behandlung unterzogen wird.

Die Trägerschicht ist faktisch eine poröse Membran, die auch als poröse Polymermembran ausgebildet sein kann und in diesem Falle nach dem bekannten Phaseninversionsprozess hergestellt werden kann. Dabei wird eine Lösung, bestehend aus dem gewählten Polymer und dem Lösemittel oder aus dem gewählten Polymer-Füllstoff-Lösemittel auf einen geeigneten mechanischen Träger, bspw. ein Vlies, aufgetragen. Danach wird in einem Nichtlösemittel ausgefällt.

Als Träger für die porösen Membranen eignen sich neben Vliesen auch Textilgewebe aus allen bekannten Werkstoffen. Das Nichtlösemittel im Fällprozess ist vorzugsweise Wasser und ist vorzugsweise mit dem Lösemittel mischbar. Eine weitere Behandlung mit Wasser dient zum Entfernen von Resten des Lösemittels und kann die Trennleistung der Membranen gezielt beeinflussen. Danach wird die derart hergestellte poröse Trägerschicht, bspw. in Form der vorbeschriebenen porösen Polymermembran, nach den der Fachwelt in diesem Zusammenhang bekannten Verfahren, bspw. in einem Luftstrom, getrocknet. Die verwendeten Trägerschichten haben eine enge Porenradienverteilung und einen solchen mittleren Porenradius, dass die Moleküle des Lösemittel-Polyvinylalkohol-metallorganische-Verbindung-Gemisches nicht in die Poren der porösen Trägerschicht eindringen können.

Die mittels des erfindungsgemäßen Verfahrens hergestellte stoffselektive Trennschicht der Kompositmembran weist vorzugsweise eine Dicke im Bereich von 0,2 bis 10 µm, vorzugsweise eine Dicke im Bereich von 1 bis 5 µm, auf.

Gemäß einer weiteren Ausgestaltung des Verfahrens wird die metallorganische Verbindung, vorzugsweise vor Zugabe zum Lösemittel-Polyvinylalkoholgemisch, komplexiert, wobei die Komplexierung bspw. mittels Acetylaceton erfolgen kann. Die Komplexierung erfolgt deshalb, um die spontane Kondensation der metallorganischen Verbindung bei Zugabe zur restlichen Polyvinylalkohollösung zu verhindern.

Prinzipiell ist jede geeignete metallorganische Verbindung als Zusatz zum Lösemittel-Polyvinylalkohol-Gemisch im Sinne der erfindungsgemäßen Verfahrensführung und im Sinne der herzustellenden Membran geeignet. Erfindungsgemäß ist die metallorganische Verbindung Tetraethylorthotitanat oder Tetraorthopropylzirkonat. In der stoffselektiven Trennschicht sind nach Abschluss des Verfahrens die Titan- oder Zirkoniumorganylen mineralisiert, die in Form von Oxiden oder deren Hydroxydderivaten verteilt sind oder aus Organometallchelaten ausgebildet, die zu unlöslichen Festkörpern vernetzt sind.

Nachdem die nach Art einer porösen Trägermembran hergestellte Trägerschicht bereitsteht, und das Lösemittel-Polyvinylalkohol-metallorganische-Verbindung-Gemisch auf der Trägerschicht aufgebracht ist, wird die so gebildete Vorstufe der späteren Kompositmembran einer thermischen Behandlung unterzogen. Mittels einer ersten thermischen Behandlung bei einer Temperatur im Bereich von 100 °C wird zunächst getrocknet. In einer zweiten thermischen Behandlung wird die erhaltene Kompositmembran bei einer Temperatur im Bereich von +120 °C bis +200 °C, vorzugsweise +160 °C bis +180 °C, zur Vernetzung der Trägerschicht mit der stoffselektiven Schicht und zur in-situ-Ausbildung des Metalloxids oder eines Polychelatkomplexes oder einer Chelat-Polyvinylalkohol-Kondensationsverbindung oder einem der vorgenannten Metallderivate in der stoffselektiven Schicht unterworfen. Durch die erste und zweite thermische Behandlung wird das Komplexierungsmittel teilweise, überwiegend oder gänzlich entfernt und somit die Hydrolyse der metallorganischen Verbindung ermöglicht.

Zu den metallorganischen Verbindungen, die im Sinne der Erfindung verwendet werden können, zählen auch, wie zuvor schon angedeutet, wasserlösliche metallorganische Chelatkomplexe, bei denen z.B. Milchsäure, Zitronensäure oder Weinsäure als Chelatkomplexe fungieren. Durch die thermische Behandlung können somit auch auf die gleiche Weise wie vorangehend beschrieben Chelatkomplexe entfernt und die Hydrolyse der metallorganischen Bestandteile ermöglicht werden.

Der Vorteil des erfindungsgemäßen Herstellungsverfahrens zeigt sich darin, dass auf einfache Weise eine Kompositmembran hergestellt werden kann, wobei die Ausbildung der stoffselektiven Trennschicht durch Beschichtung der Trägerschicht in einer an sich konventionell aufgebauten Beschichtungsvorrichtung hergestellt werden kann. Durch Einstellung des Verhältnisses aus Polyvinylalkohol und metallorganischer Verbindung kann die Trennleistung der Membran, d.h. deren Selektivität und Flusseigenschaft, direkt eingestellt werden. Speziell über den Anteil der metallorganischen Verbindung bzw. des daraus entstehenden Metallderivats oder auch des Metallchelatkomplexes kann insbesondere der Fluss des Permeats durch die Membran eingestellt werden, da auf diese Weise vorrangig die Quellung der stoffselektiven Trennschicht beeinflusst werden kann.

Gelöst wird die Aufgabe im Hinblick auf die Membran zur Trennung von Stoffgemischen nach der Methode der Dampfpermeation oder der Pervaporation, insbesondere zur Entwässerung organischer Lösemittel, umfassend wenigstens eine Trägerschicht und wenigstens eine darauf befindliche stoffselektive Trennschicht, dadurch, dass die Membran nach dem oben beschriebenen erfindungsgemäßen Verfahren erhältlich ist, wobei die stoffselektive Trennschicht aus Polyvinylalkohol besteht, die wenigstens ein metallisches Element und/oder wenigstens eines seiner Derivate in der Trennschicht im Wesentlichen gleichmäßig verteilt enthält, wobei das wenigstens eine metallische Element aus der Magnesium- oder Aluminium-Gruppe stammt oder Zirkonium oder Titan ist.

Die Metalle sind Metalle aus der Gruppe Magnesium, Aluminium, können aber auch Zirkonium und Titan sein, und zwar in metallischer oder komplexierter Form oder als deren unlösliche Salze, Oxide und Hydroxioxide.

Allgemein kann gesagt werden, dass die Derivate z.B. Salze, Oxide und Oxihydroxide und Metallorganyle sind.

Der Vorteil der erfindungsgemäßen Membran besteht im wesentlichen darin, dass diese, wie aufgabengemäß angestrebt, bis in den Bereich von 150 °C temperaturstabil ist und sich somit ausgezeichnet für die Entwässerung organischer Lösemittel mittels Dampfpermeation aber auch Pervaporation eignet und bspw. für die Entwässerung von Lösemittel -Wasser-Gemischen bis zu einem Wassergehalt von 20 Gew.% einsetzbar ist.

Ein weiterer wesentlicher Vorteil ist der, dass, wie ebenfalls angestrebt, die erfindungsgemäß ausgebildete Membran in ihrem Randbereich schweißbar ist, so dass die Membranen sich hervorragend zur Ausbildung von Membrankissen eignen. Damit ist die Verwendung eines Klebers oder dergleichen überflüssig, wobei ein Kleber grundsätzlich ein Stabilitätsproblem bei derartigen Membrankissen darstellt. Zudem kann mittels der erfindungsgemäßen Membran eine auftretende räumliche Ausdehnung der Membran durch Quellung im organischen Trennmedium toleriert werden, da die einzelnen Membrankissen in einer Trennvorrichtung frei angeordnet sind und zudem keine Bedenken im Hinblick auf eine eingeschränkte Stabilität der Membrankissen aufgrund ihrer Schweißverbindung bestehen, wie sie aber bestehen würden, wenn diese Membranen aus nicht schweißfähigem Werkstoff wie bisher bestehen würden.

Gemäß einer vorteilhaften Ausgestaltung der Membran ist das Molekulargewicht des Polyvinylalkohols derart eingestellt, dass es im wesentlichen im Bereich zwischen 20.000 und 200.000 g/mol liegt, vorzugsweise in einem Bereich zwischen 100.000 bis 150.000 g/mol. Da das Molekulargewicht des Polyvinylalkohols in Abhängigkeit der späteren Verwendung der Membran für bestimmte Trennaufgaben gezielt ausgewählt und eingestellt werden kann, sind Membrane erfindungsgemäß bereitstellbar, die die für die speziell gewählte Trennaufgabe geeigneten Selektivitäten und Flüsse aufweisen. Der Polyvinylalkohol, der durch Hydrolyse herstellbar ist, weist vorzugsweise einen Hydrolysegrad im wesentlichen im Bereich zwischen 50 und 100, besonders vorzugsweise in einem Bereich zwischen 90 und 100 %, auf.

Der Polyvinylalkohol zur Ausbildung der stoffselektiven Trennschicht ist vorzugsweise in einem Lösemittel, bspw. destilliertem Wasser, gelöst, wobei vorzugsweise die Konzentration der Lösung im wesentlichen im Bereich zwischen 0,5 Gew. % bis zur Löslichkeitsgrenze des Polyvinylalkohols liegt, besonders vorteilhafterweise im wesentlichen in einem Bereich zwischen 1 und 5 Gew. %.

Die vorgenannten metallischen Membranbestandteile, resp. deren Derivate, liegen in der Trennschicht im Wesentlichen gleichmäßig verteilt vor.

Die Trägerschicht der erfindungsgemäßen Kompositmembran ist vorzugsweise porös ausgebildet und kann aus beliebigen geeigneten Polymeren, bspw. Polyacrylnitril, Polyamidimid, Polyetherimid, Polyethersulfon und. auch anderen membranbildenden Polymeren sowie deren Modifikationen bestehen. Als Trägerschicht können auch andere Werkstoffe, aus denen anorganische Membranen hergestellt werden, verwendet werden, und es können auch anorganisch-organische Werkstoffe verwendet werden, wie man diese im Zusammenhang mit den sog. Blendmembranen verwendet.

Ein weiterer Vorteil der erfindungsgemäßen Membran und des Verfahrens zu ihrer Herstellung ist, dass zur Vernetzung des Polyvinylalkohols keine giftigen Substanzen wie z.B. Glutardialdehyd oder Isozyanate verwendet werden. Insbesondere im Hinblick auf den Vorteil der mit dem Verfahren hergestellten erfindungsgemäßen Membran sei angemerkt, dass diese aufgrund der Vernetzung mit besagten metallorganischen Verbindungen eine wesentlich verbesserte chemische Stabilität bei hohen Temperaturen als bisherige Membranen dieser Art aufweist.

Die erfindungsgemäße Membran eignet sich deshalb in hervorragender Weise auch für eine diskontinuierliche Verfahrensführung in einem späteren Trennverfahren bzw. einer Vorrichtung zur Ausführung des Trennverfahrens, wie sie bspw. in der DE-A-100 02 692 beschrieben ist.

### Beispiel 1

Folgende Lösungen wurden hergestellt:
Titanatlösung
   174.68 g Ethanol (wasserfrei)
   1.36 g Tetraethylorthotitanat
   11.21 g Acetylaceton
PVA-Lösung
   5 g PVA
   95 g destilliertes Wasser
Beschichtungslösung 1
   250,0 g 5 Gew.%ige PVA-Lösung
   375,80 g destilliertes Wasser
   117,50 g Titanatlösung
   pH = 3 (angesäuert mit H₂SO₄)
Beschichtungslösung 2
   120,82 g 5 Gew%ige PVA-Lösung
   540,26 g destilliertes Wasser
   56,84 g Titanatlösung
   pH = 3 (angesäuert mit H₂SO₄)

Tetraethylorthotitanat wurde mit wasserfreiem Methanol gemischt. Zu dieser Lösung wurde die entsprechende Menge Acetylaceton gegeben und mindestens 1 h bei Raumtemperatur gerührt.

PVA wurde unter Rühren bei 90 °C in Wasser gelöst.

Die erfindungsgemäße Kompositmembran wurde durch Auftragen der Beschichtungslösungen auf eine poröse PAN-Membran mittels Dip-Coating Technik mit einer Beschichtungsmaschine hergestellt. Zuerst wurde Beschichtungslösung 1 aufgetragen und anschließend Beschichtungslösung 2. Nach jedem Beschichtungsvorgang wurde die Membran bei 100 °C im Luftstrom getrocknet. Nach Abschluß aller Beschichtungsvorgänge wurde die Membran 2 h bei 180 °C vernetzt.

Die so hergestellte hydrophile Membran wurde in der Dampfpermeation wie folgt überprüft:
Feedlösung: 89 Gew% Ethanol /11 Gew% Wasser
Feedtemperatur: 78,8 °C
Feeddruck: 1010 mbar
Gesamtfluß = 1.037 kg/m² h
α (Wasser/Ethanol) = 419

### Beispiel 2

Die unter Beispiel 1 beschriebene Membran wurde in der Dampfpermeation wie folgt überprüft:
Feedlösung: 89 Gew% Ethanol/11 Gew% Wasser
Feedtemperatur: 118,2 °C
Feeddruck: 3960 mbar
Gesamtfluß = 7.56 kg/m₂ h
α (Wasser/Ethanol) = 62

## Patentansprüche

1. Verfahren zur Herstellung einer Membran zur Trennung von Stoffgemischen nach der Methode der Dampfpermeation oder der Pervaporation, insbesondere zur Entwässerung organischer Lösemittel, umfassend wenigstens eine Trägerschicht und wenigstens eine darauf aufgebrachte stoffselektive Trennschicht, **dadurch gekennzeichnet, dass**
a. in ein Lösemittel Polyvinylalkohol gegeben wird,
b. nachfolgend in das Lösemittel-Polyvinylalkohol-Gemisch eine metallorganische Verbindung gegeben wird, die wenigstens ein metallisches Element enthält, das aus der Magnesium- oder Aluminium-Gruppe stammt oder Zirkonium oder Titan ist, wobei die metallorganische Verbindung Tetraethylorthotitanat, Tetraorthopropylzirkonat oder ein wasserlöslicher metallorganischer Chelatkomplex ist, und danach
c. das Lösemittel-Polyvinylalkohol-metallorganische Verbindung-Gemisch als stoffselektive Trennschicht auf die Trägerschicht aufgebracht wird,
wobei das die metallorganische Verbindung enthaltende Lösemittel-Polyvinylalkohol-metallorganische Verbindung-Gemisch nach Aufbringung auf die Trägerschicht zusammen mit der Trägerschicht einer thermischen Behandlung unterworfen wird.

2. Verfahren nach Anspruch 1, **dadurch gekennzeichnet, dass**
d. die metallorganische Verbindung vor Zugabe zum Lösemittel-Polyvinylalkohol-Gemisch komplexiert wird.

3. Verfahren nach Anspruch 2, **dadurch gekennzeichnet, dass** die Komplexierung in Acetylaceton erfolgt.

4. Verfahren nach Anspruch 1, **dadurch gekennzeichnet, dass** nach der Aufbringung des die Trennschicht bildenden Gemisches auf die Trägerschicht das Gesamtelement einer ersten thermischen Behandlung bei einer Temperatur im Bereich von 100°C zur Trocknung unterworfen wird.

5. Verfahren nach Anspruch 4, **dadurch gekennzeichnet, dass** nach Abschluss der ersten thermischen Behandlung das Gesamtelement einer zweiten thermischen Behandlung bei einer Temperatur im Bereich von +120 °C bis +200 °C, vorzugsweise +160 °C bis +180 °C, zur Vernetzung der Trägerschicht mit der stoffselektiven Schicht und zur in-situ-Ausbildung des Metalloxids in der stoffselektiven Schicht unterworfen wird.

6. Membran zur Trennung von Stoffgemischen nach der Methode der Dampfpermeation oder der Pervaporation, insbesondere zur Entwässerung organischer Lösemittel, umfassend wenigstens eine Trägerschicht und wenigstens eine darauf befindliche stoffselektive Trennschicht, erhältlich in einem Verfahren nach einem der Ansprüche 1 bis 5, wobei die stoffselektive Trennschicht aus Polyvinylalkohol besteht, die wenigstens ein metallisches Element und/oder wenigstens eines seiner Derivate in der Trennschicht im Wesentlichen gleichmäßig verteilt enthält, wobei das wenigstens eine metallische Element aus der Magnesium- oder Aluminium-Gruppe stammt oder Zirkonium oder Titan ist.

7. Membran nach Anspruch 6, **dadurch gekennzeichnet, dass** das Molekulargewicht des Polyvinylalkohols derart eingestellt ist, dass es im Wesentlichen in einem Bereich zwischen 20.000 und 200.000 g/mol liegt.

8. Membran nach Anspruch 7, **dadurch gekennzeichnet, dass** das Molekulargewicht im Wesentlichen in einem Bereich zwischen 100.000 bis 150.000 g/mol liegt.

9. Membran nach einem der Ansprüche 6 bis 8, **dadurch gekennzeichnet, dass** der Polyvinylalkohol, der durch Hydrolyse herstellbar ist, einen Hydrolysegrad im Wesentlichen im Bereich zwischen 50 und 100 % aufweist.

10. Membran nach Anspruch 9, **dadurch gekennzeichnet, dass** der Hydrolysegrad im Wesentlichen in einem Bereich zwischen 98 und 100 % liegt.

11. Membran nach einem oder mehreren der Ansprüche 6 bis 10, **dadurch gekennzeichnet, dass** der Polyvinylalkohol zur Ausbildung der stoffselektiven Trennschicht in einem Lösemittel gelöst ist.

12. Membran nach Anspruch 11, **dadurch gekennzeichnet, dass** die Konzentration der Lösung im Wesentlichen im Bereich von 0,5 Gew.% bis zur Löslichkeitsgrenze des Polyvinylalkohols liegt.

13. Membran nach Anspruch 12, **dadurch gekennzeichnet, dass** die Konzentration im Wesentlichen in einem Bereich von 1 und 5 Gew.% liegt.

14. Membran nach einem oder mehreren der Ansprüche 6 bis 13, **dadurch gekennzeichnet, dass** das metallische Element und/oder dessen Derivat in der Trennschicht im Wesentlichen gleichmäßig verteilt ist.

15. Membran nach Anspruch 14, **dadurch gekennzeichnet, dass** das Derivat Titandioxid TiO₂ ist.

16. Membran nach einem oder mehreren der Ansprüche 6 bis 15, **dadurch gekennzeichnet, dass** die Trägerschicht porös ausgebildet ist.

17. Membran nach einem oder mehreren der Ansprüche 6 bis 16, **dadurch gekennzeichnet, dass** die Trägerschicht aus Polymeren und/oder deren Modifikationen besteht.

18. Membran nach einem oder mehreren der Ansprüche 6 bis 17, **dadurch gekennzeichnet, dass** die Trägerschicht aus anorganischen Werkstoffen besteht.

19. Membran nach einem oder mehreren der Ansprüche 6 bis 18, **dadurch gekennzeichnet, dass** die Trägerschicht aus einer anorganisch-organischen Blendmembran besteht.

## Claims

1. Method of producing a membrane for separating mixtures of substances in accordance with the vapour permeation method or pervaporation method, especially for removing water from organic solvents, comprising at least one support layer and, applied thereto, at least one substance-selective separating layer, **characterised in that**
a. polyvinyl alcohol is added to a solvent,
b. an organometallic compound is then added to the solvent/polyvinyl alcohol mixture, which compound contains at least one metallic element that originates from the magnesium or aluminium group or is zirconium or titanium, the organometallic compound being tetraethyl orthotitanate, tetraorthopropyl zirconate or a watersoluble organometallic chelate complex, and then
c. the solvent/polyvinyl alcohol/organometallic compound mixture is applied as substance-selective separating layer to the support layer,
wherein, after application to the support layer, the organometallic-compound-containing solvent/polyvinyl alcohol/organometallic compound mixture is subjected to a thermal treatment together with the support layer.

2. Method according to claim 1, **characterised in that**
d. the organometallic compound is complexed before addition to the solvent/polyvinyl alcohol mixture.

3. Method according to claim 2, **characterised in that** the complexing is effected in acetyl acetone.

4. Method according to claim 1, **characterised in that** once the mixture forming the separating layer has been applied to the support layer, the entire element is subjected to a first thermal treatment at a temperature in the region of 100°C to effect drying.

5. Method according to claim 4, **characterised in that** once the first thermal treatment is complete, the entire element is subjected to a second thermal treatment at a temperature in the range of from +120°C to +200°C, preferably from +160°C to +180°C, to effect crosslinking of the support layer with the substance-selective layer and to effect *in situ* formation of the metal oxide in the substance-selective layer.

6. Membrane for separating mixtures of substances in accordance with the vapour permeation method or pervaporation method, especially for removing water from organic solvents, comprising at least one support layer and, located thereon, at least one substance-selective separating layer, obtainable in a method according to any one of claims 1 to 5, wherein the substance-selective separating layer consists of polyvinyl alcohol that contains at least one metallic element and/or at least one of its derivatives distributed substantially uniformly in the separating layer, the at least one metallic element originating from the magnesium or aluminium group or being zirconium or titanium.

7. Membrane according to claim 6, **characterised in that** the molecular weight of the polyvinyl alcohol has been adjusted in such a way that it lies substantially in a range between 20,000 and 200,000 g/mol.

8. Membrane according to claim 7, **characterised in that** the molecular weight lies substantially in a range between 100,000 and 150,000 g/mol.

9. Membrane according to any one of claims 6 to 8, **characterised in that** the polyvinyl alcohol, which is producible by hydrolysis, has a degree of hydrolysis substantially in the range between 50 and 100 %.

10. Membrane according to claim 9, **characterised in that** the degree of hydrolysis lies substantially in a range between 98 and 100 %.

11. Membrane according to one or more of claims 6 to 10, **characterised in that** the polyvinyl alcohol for forming the substance-selective separating layer is dissolved in a solvent.

12. Membrane according to claim 11, **characterised in that** the concentration of the solution lies substantially in the range of from 0.5 % by weight up to the solubility limit of the polyvinyl alcohol.

13. Membrane according to claim 12, **characterised in that** the concentration lies substantially in a range of from 1 to 5 % by weight.

14. Membrane according to one or more of claims 6 to 13, **characterised in that** the metallic element and/or its derivative is substantially uniformly distributed in the separating layer.

15. Membrane according to claim 14, **characterised in that** the derivative is titanium dioxide TiO₂.

16. Membrane according to one or more of claims 6 to 15, **characterised in that** the support layer is porous.

17. Membrane according to one or more of claims 6 to 16, **characterised in that** the support layer consists of polymers and/or modifications thereof.

18. Membrane according to one or more of claims 6 to 17, **characterised in that** the support layer consists of inorganic materials.

19. Membrane according to one or more of claims 6 to 18, **characterised in that** the support layer consists of an inorganic-organic blend membrane.

## Revendications

1. Procédé pour la fabrication d'une membrane pour la séparation de mélanges de substances d'après la méthode de perméation de vapeur ou de pervaporation, en particulier pour la déshydratation de solvants organiques, comprenant au moins une couche support et au moins une couche séparatrice sélective de substance appliquée dessus, **caractérisé en ce que**
a) on ajoute de l'alcool polyvinylique dans un solvant,
b) on met ensuite dans le mélange de solvant et d'alcool polyvinylique un composé organométallique contenant au moins un élément métallique qui provient du groupe du magnésium ou de l'aluminium ou qui est du zirconium ou du titane, le composé organométallique étant un tétraéthylorthotitanate, un tétraorthopropylzirconate ou un complexe chélate organométallique hydrosoluble, et ensuite
c) on applique le mélange de solvant, d'alcool polyvinylique et du composé organométallique comme couche séparatrice sélective de substance sur la couche support,
sachant qu'après l'application sur la couche support, le mélange de solvant, d'alcool polyvinylique et du composé organométallique contenant le composé organométallique est soumis ensemble avec la couche support à un traitement thermique.

2. Procédé selon la revendication 1, **caractérisé en ce que**
d) avant son addition dans le mélange de solvant et d'alcool polyvinylique, le composé organométallique est complexé.

3. Procédé selon la revendication 2, **caractérisé en ce que** la complexation s'effectue dans de l'acétylacétone.

4. Procédé selon la revendication 1, **caractérisé en ce qu'**après l'application du mélange formant la couche séparatrice sur la couche support, l'ensemble de l'élément est soumis pour séchage à un premier traitement thermique à une température voisine de 100 °C.

5. Procédé selon la revendication 4, **caractérisé en ce qu'**après la fin du premier traitement thermique, l'élément complet est soumis à un deuxième traitement thermique à une température dans l'intervalle de +120 °C à +200 °C, de préférence de +160 °C à +180 °C, pour la réticulation de la couche support avec la couche séparatrice sélective de substance et pour la formation in situ de l'oxyde métallique dans la couche sélective de substance.

6. Membrane pour la séparation de mélanges de substances d'après la méthode de perméation de vapeur ou de pervaporation, en particulier pour la déshydratation de solvants organiques, comprenant au moins une couche support et au moins une couche séparatrice sélective de substance appliquée dessus, pouvant être obtenue dans un procédé selon l'une quelconque des revendications 1 à 5, la couche séparatrice sélective de substance consistant en alcool polyvinylique, qui contient au moins un élément métallique et/ou au moins un de ses dérivés répartis sensiblement uniformément dans la couche séparatrice, sachant que ledit au moins un élément métallique provient du groupe du magnésium ou de l'aluminium ou est du zirconium ou du titane.

7. Membrane selon la revendication 6, **caractérisée en ce que** le poids moléculaire de l'alcool polyvinylique est ajusté de telle sorte qu'il est compris sensiblement dans un intervalle entre 20.000 et 200.000 g/mol.

8. Membrane selon la revendication 7, **caractérisée en ce que** le poids moléculaire est compris sensiblement dans un intervalle entre 100.000 et 150.000 g/mol.

9. Membrane selon l'une ou plusieurs des revendications 6 à 8, **caractérisée en ce que** l'alcool polyvinylique, qui peut être obtenu par hydrolyse, présente un degré d'hydrolyse compris sensiblement dans un intervalle entre 50 et 100 %.

10. Membrane selon la revendication 9, **caractérisée en ce que** le degré d'hydrolyse est compris sensiblement dans un intervalle entre 98 et 100 %.

11. Membrane selon l'une ou plusieurs des revendications 6 à 10, **caractérisée en ce que** l'alcool polyvinylique pour la formation de la couche séparatrice sélective de substance est dissous dans un solvant.

12. Membrane selon la revendication 11, **caractérisée en ce que** la concentration de la solution est comprise sensiblement dans l'intervalle entre 0,5 % en poids et la limite de solubilité de l'alcool polyvinylique.

13. Membrane selon la revendication 12, **caractérisée en ce que** la concentration est comprise sensiblement dans un intervalle entre 1 et 5 % en poids.

14. Membrane selon l'une ou plusieurs des revendications 6 à 13, **caractérisée en ce que** dans la couche séparatrice, l'élément métallique et/ou son dérivé sont répartis sensiblement uniformément.

15. Membrane selon la revendication 14, **caractérisée en ce que** le dérivé est de l'oxyde de titane TiO₂.

16. Membrane selon l'une ou plusieurs des revendications 6 à 15, **caractérisée en ce que** la couche support est formée poreuse.

17. Membrane selon l'une ou plusieurs des revendications 6 à 16, **caractérisée en ce que** la couche support consiste en polymères et/ou en leurs modifications.

18. Membrane selon l'une ou plusieurs des revendications 6 à 17, **caractérisée en ce que** la couche support consiste en matériaux inorganiques.

19. Membrane selon l'une ou plusieurs des revendications 6 à 18, **caractérisée en ce que** la couche support consiste en une membrane écran inorganique-organique.
